# EUROPÄISCHE PATENTSCHRIFT

(11) **EP 1 927 419 B1**
(45) Veröffentlichungstag und Bekanntmachung des Hinweises auf die Patenterteilung: **17.06.2015**
(21) Anmeldenummer: 07023231.9
(22) Anmeldetag: 30.11.2007
(51) Int. Cl.: B23K 1/00, B23K 1/20, B21C 37/04, B22D 19/14, B23K 35/02, D03D 15/02

(54) **Netzelektrode mit einem verlötbaren Netz aus miteinander über einer Netzfläche verwebten, eine Dickschichtverzinnung aufweisenden Drähten ; Verfahren zur Herstellung einer solchen Netzelektrode**
Grid electrode with a grid comprising netted wires having a thick tinning ; Method of manufacturing such a grid electrode
Electrode grille avec une grille comprenant des fils enlacés présentant un étamage ; Procédé de fabrication d'une telle électrode grille

(30) Priorität: 03.12.2006 DE 102006057178
(43) Veröffentlichungstag der Anmeldung: 04.06.2008
(73) Patentinhaber: Waldemar Hoening oHG, 48324 Sendenhorst (DE)
(72) Erfinder:
(74) Vertreter: BSB Intellectual Property Law

(56) Entgegenhaltungen:
- EP-A- 0 109 505
- WO-A-01/61078
- AU-B2- 528 765
- JP-A- 2006 162 149
- US-A- 4 661 215
- US-A- 4 824 737
- US-A- 5 658 689
- US-A- 6 054 647
- US-A1- 2006 123 862
- DATABASE WPI Week 197420 Derwent Publications Ltd., London, GB; AN 1974-37545V XP002472013 & JP 49 016248 B (NIPPON SHEET GLASS CO LTD) 20. April 1974 (1974-04-20)

## Beschreibung

Die Erfindung betrifft eine Netzelektrode und ein Verfahren zur Herstellung einer Netzelektrode gemäß dem Oberbegriff des Ansprüche 1 und 11 (Siehe, z.B., JP 2006/162149 A).

Im Stand der Technik sind verlötbare Netze bekannt geworden, bei denen zunächst aus Drähten ein Netz hergestellt wurde, welches anschließend im einem galvanischen Bad mit einer Schicht aus Lötzinn versehen wurde. Dazu wird das fertig gewebte Netz entweder langsam kontinuierlich durch ein entsprechendes galvanisches Bad durchgezogen, oder es werden fertig konfektionierte Netzmatten in die Bäder eingelegt, um das Netz mit einer Schicht aus Lötzinn zu beschichten. Nachteilig bei diesen galvanischen Beschichtungsverfahren ist, dass das beschichtete Netz örtlich unterschiedliche Beschichtungsdicken aufweist, je nachdem, ob ein Kreuzungspunkt des Netzes vorliegt, an dem sich mehr Material anhäuft, oder ob ein freier Draht vorliegt, an dem sich örtlich - relativ gesehen - weniger Material angelagert hat.

Für viele technische Anwendungen ist es sehr wichtig, eine homogene Qualität eines verlötbaren Netzes zu garantieren, um höchsten Qualitätsansprüchen zu genügen. Weist das verlötbare Netz örtlich eine schlechtere Qualität auf, die zum Ausfall der Komponente führt, in die das verlötbare Netz später eingesetzt wird, so kann der Schaden ein Vielfaches des Wertes des Netzes betragen.

Deshalb werden hohe Anforderungen an solche verlötbaren Netze gestellt, deren Qualität deshalb aufwendig überprüft wird. Dazu gehört auch, dass stichprobenartig verlötbare Netze ausgewählt werden und deren Qualität anhand eines Schliffbildes überprüft wird. Wenn das Drahtnetz bei der Untersuchung nicht exakt ausgerichtet wird, kann das Schliffbild schief zum Verlauf der Kett-oder Schussdrähte ausgerichtet sein. Die Drahtkreuzungspunkte, an denen die Drähte einerseits dicht aneinander liegen und an denen andererseits sich mehr verlötbares Material angesammelt hat, sind in solchen Schliffbildern dann nur schwer zu beurteilen, da die dortige unregelmäßige Materialdicke auch durch den Herstellungsprozess bedingt sein kann. Deshalb ist es schwierig, die Qualität solcher Netze zu garantieren.

Gegenüber dem angeführten Stand der Technik ist es deshalb Aufgabe der vorliegenden Erfindung, eine Netzelektrode und ein Verfahren zur Herstellung einer Netzelektrode zur Verfügung zu stellen, bei dem eine homogenere Qualität erzielbar ist. Ein bevorzugter Aspekt der Aufgabe ist es, ein Netz zur Verfügung zu stellen, bei dem die Überprüfung der Qualität einfacher ist.

Diese Aufgabe wird gelöst durch eine Netzelektrode mit den Merkmalen des Anspruchs 1 und durch ein Verfahren zur Herstellung einer Netzelektrode mit den Merkmalen des Anspruchs 11. Bevorzugte Weiterbildungen der Erfindung sind Gegenstand der Unteransprüche.

Alternativ oder zusätzlich zur Aufbringung einer Metallschicht kann in einer bevorzugten Weiterbildung der mit einer Dickschichtverzinnung versehene Draht vor der Herstellung des Netzes zur Glättung gezogen werden, indem der Draht beispielsweise durch ein Loch, einen Ziehstein bzw. eine Schablone oder eine Matrize gezogen wird, die einen geringfügig kleineren Innendurchmesser aufweist als der typische Außendurchmesser des mit der Dickschichtverzinnung versehenen Drahtes.

Zur Erhöhung der Wandfestigkeit kann der gezogene Draht noch mit der dünnen Metallschicht umgeben werden.

Zusätzlich dazu kann der mit einer Dickschichtverzinnung versehene Draht von einer Schutzschicht umgeben werden, bevor das Netz hergestellt wird. Die Schutzschicht kann beispielsweise aus Lack oder Kunststoff oder einem sonstigen geeigneten Kunst- oder Naturstoff bestehen. Nach dem Weben des verlötbaren Netzes bzw. Drahtnetzes kann die Schutzschicht durch chemische Mittel oder dergleichen wieder entfernt werden, so dass anschließend wieder ein fertiges verlötbares Netz vorliegt, welches aus den mit einer Dickschichtverzinnung bestehenden Drähten besteht.

In vorteilhaften Weiterbildungen der Erfindung bestehen wenigstens einige der Kettdrähte und/oder wenigstens einige der Schussdrähte aus den mit einer Dickschichtverzinnung versehenen Drähten, die gezogen und/oder zusätzlich wiederum jeweils mit einer dünnen äußeren Metallschicht und/oder mit einer Schutzschicht versehen sein können.

Zwei sich kreuzende Drähte weisen aufgrund der Dickschichtverzinnung einen Abstand voneinander auf, der z.B. der doppelten Dicke der Dickschichtverzinnung entsprechen kann. Das gilt auch an Drahtkreuzungspunkten, bei denen bei konventionellen verlötbaren Netzen bzw. Drahtnetzen zwischen den sich kreuzenden Drähten gar keine Verzinnungsschicht vorliegt.

Bei ersten Versuchen zur Herstellung eines solchen Netzes hat sich gezeigt, dass die mit einer Dickschichtverzinnung versehenen Drähte sich nur schwer weben lassen, da die Oberfläche nach der insbesondere galvanischen Beschichtung relativ rau ist und so für einen hohen Abrieb beim Webprozess sorgt. Das kann zu unterschiedlichen Dicken der Dickschichtverzinnung und somit zu undefinierten Eigenschaften des fertigen Netzes führen, wodurch das verlötbare Netz unbrauchbar werden kann.

Es hat sich nun herausgestellt, dass die hauptsächliche Schwierigkeit bei der Herstellung des verlötbaren Netzes darin besteht, dass die Außenoberfläche der Dickschichtverzinnung relativ rau ist, deshalb ist erfindungsgemäß eine Glättung der Oberfläche der Dickschichtverzinnung vorgesehen.

Das verlötbare Netz ist bevorzugt als engmaschiges Netz ausgeführt.

In einer bevorzugten Weiterbildung der Erfindung werden die Drähte mit der Dickschichtverzinnung über der Länge durch Auftragung einer dünnen Metallschicht oberflächenbehandelt. Beispielsweise kann die Dicke einer solchen dünnen Metallschicht 0,2 bis 5 Mikrometer betragen. Insbesondere beträgt die Dicke etwa 0,2 bis 2 Mikrometer. Als ein geeignetes Material für eine solche dünne Metallschicht haben sich kupferhaltige Materialien oder Legierungen oder reines Kupfer oder Silber bzw. silberhaltige Materialien oder Silberlegierungen herausgestellt, mit denen die äußere Oberfläche in einem erheblichen Umfang geglättet und in angemessenen Maße auch gehärtet werden kann, ohne dass die Löteigenschaften negativ beeinflusst werden.

Zur Aufbringung einer Metallschicht wird gemäß der Erfindung der mit einer Dickschichtverzinnung versehene Draht vor der Herstellung des Netzes zur Glättung gezogen, indem der Draht durch ein Loch, einen Ziehstein bzw. eine Schablone oder eine Matrize gezogen wird, die einen geringfügig kleineren Innendurchmesser aufweist als der typische Außendurchmesser des mit der Dickschichtverzinnung versehenen Drahtes.

Zur Erhöhung der Wandfestigkeit kann der gezogene Draht noch mit der dünnen Metallschicht umgeben werden.

Zusätzlich dazu kann der mit einer Dickschichtverzinnung versehene Draht von einer Schutzschicht umgeben werden, bevor das Netz hergestellt wird. Die Schutzschicht kann beispielsweise aus Lack oder Kunststoff oder einem sonstigen geeigneten Kunst- oder Naturstoff bestehen. Nach dem Weben des verlötbaren Netzes bzw. Drahtnetzes kann die Schutzschicht durch chemische Mittel oder dergleichen wieder entfernt werden, so dass anschließend wieder ein fertiges verlötbares Netz vorliegt, welches aus den mit einer Dickschichtverzinnung bestehenden Drähten besteht.

In vorteilhaften Weiterbildungen der Erfindung bestehen wenigstens einige der Kettdrähte und/oder wenigstens einige der Schussdrähte aus den mit einer Dickschichtverzinnung versehenen Drähten, die gezogen und/oder zusätzlich wiederum jeweils mit einer dünnen äußeren Metallschicht und/oder mit einer Schutzschicht versehen sein können.

Durch eine Oberflächenbehandlung der Dickschichtverzinnung der Drähte wird eine glattere und eventuell auch festere Oberfläche der Drähte erzielt, die bei der weiteren Verarbeitung weniger Abrieb erzeugt. Dadurch wird die Verschmutzung des Netzes und der Webmaschine erheblich reduziert. Insbesondere wenn die Dickschichtverzinnung galvanisch aufgebracht wird, ist die Außenoberfläche der Drähte oft rau. Außerdem stehen kleine und kleinste Partikel von den Drähten ab, die bei der weiteren Verarbeitung in der Webmaschine zur Herstellung des Netzes abgeschert werden und so zu einer erheblichen Verunreinigung der Anlage und des Netzes führen. Wird die Oberfläche vor der weiteren Verarbeitung durch einen Ziehprozess geglättet oder mit einer glättenden Schutzschicht versehen, sinkt der Abrieb, so dass die Schmutzbelastung erheblich abnimmt.

In bevorzugten Weiterbildungen bestehen wenigstens einige Kettdrähte des verlötbaren Netzes aus Drähten ohne Dickschichtverzinnung, insbesondere bestehen in einigen Bereichen die Kettdrähte des verlötbaren Netzes aus Drähten ohne Dickschichtverzinnung.

In der Regel kreuzen sich die Kett- und die Schussdrähte bei dem verlötbaren Netz etwa senkrecht unter einem Winkel von ungefähr 90°. Auch andere Winkel sind möglich. Der Winkel der Kettdrähte oder der Winkel der Schussdrähte zu einer Längsachse oder einer Längserstreckung des verlötbaren Netzes beträgt in vorteilhaften Weiterbildungen zwischen 15° und 75°, insbesondere zwischen 30° und 60° und kann in vorteilhaften Ausgestaltungen bei etwa 45° liegen. Die Drähte sind zur Längserstreckung geneigt, um insbesondere eine Dehnung und/oder Stauchung des verlötbaren Netzes in Längsrichtung zu ermöglichen.

Um einen solchen Netzabschnitt herzustellen, wird zunächst ein großflächiges Netz hergestellt, aus dem dann unter dem gewünschten Winkel Netzabschnitte ausgeschnitten oder ausgestanzt werden. Das großflächige Netz kann neben dem Netzabschnitt zum Ausstanzen der verlötbaren Netzstücke Netzbereiche umfassen, in denen die Drähte keine Dickschichtverzinnung aufweisen, so dass einzelne Bereiche des Netzes auch aus Drähten ohne Dickschichtverzinnung bestehen können.

In bevorzugten Weiterbildungen bestehen auf einer ausgedehnten Netzfläche alle Kettdrähte aus den mit der Dickschichtverzinnung versehenen Drähten. Insbesondere bestehen auch alle Schussdrähte auf der ausgedehnten Netzfläche aus den mit der Dickschichtverzinnung versehenen Drähten. Die ausgedehnte Netzfläche kann von seitlichen Netzbereichen umgeben sein, in denen Drähte ohne Dickschichtverzinnung vorliegen.

In bevorzugten Ausgestaltungen weist der Kern der Drähte wenigstens eine Dicke von 20 Mikrometern und insbesondere von wenigstens 40 Mikrometern auf. Vorzugsweise werden Drähte mit einem Kerndurchmesser zwischen 50 und 100 Mikrometern verwendet. In einer bevorzugten Ausgestaltung beträgt der Durchmesser etwa 70 bis 80 Mikrometer.

Die radiale Dicke der Dickschichtverzinnung beträgt in allen zuvor beschriebenen Ausgestaltungen wenigstens 8 Mikrometer und liegt insbesondere zwischen 10 Mikrometer und 25 Mikrometer und vorzugsweise in einem Dickenbereich von etwa 10 bis 20 Mikrometern.

Zwischen dem Kern und der Dickschichtverzinnung kann eine Grundmetallisierungsschicht vorgesehen sein, um die Leitfähigkeit zu erhöhen. Die Dicke der Grundmetallisierungsschicht kann zwischen etwa 1 und 7 und insbesondere zwischen etwa 2 und 6 Mikrometern betragen. Vorzugsweise beträgt die Dicke etwa 3 bis 5 Mikrometer.

Insbesondere bei der zuletzt genannten Weiterbildung muss der Kern des Drahtes nicht aus einem Metall bestehen, sondern kann vorzugsweise aus einem Kunststoff oder einem Naturstoff bestehen, der bei den im vorhergesehenen Einsatzzweck vorherrschenden Temperaturen dauerhaft beständig ist. Die erfindungsgemäßen Siebelektroden aus dem verlötbaren Netz können in Brennkraftmaschinen eingesetzt werden, wo Temperaturen am Einsatzort von bis zu 220°C und etwas mehr möglich sind.

In allen beschriebenen Ausgestaltungen besteht die Dickschichtverzinnung insbesondere aus einem Lotmittel, welches beispielsweise ein Silberlot oder ein Messinglot oder ein sonstiges Lotmittel sein oder enthalten kann. Das Lotmittel kann ein Hart-oder ein Weichlot sein.

Das verlötbare Netz ist gemäß der Erfindung als Netzelektrode ausgebildet und zum elektrischen Kontaktieren von z.B. beweglichen und feststehenden Bauelementen dienen. Möglich ist insbesondere der Einsatz an keramischen Bauelementen, die schichtweise aufgebaut und elektrisch ansteuerbar sind. Bei solchen Bauelementen, die z.B. zum Einstellen von Aggregaten oder Steuerelementen verwendet werden, kann das zuvor beschriebene Netz als Netzelektrode eingesetzt werden.

In allen Anwendungsfällen wird das verlötbare Netz nach dem Herstellungs- und insbesondere Webprozess wenigstens teilweise, abschnittsweise oder bereichsweise und insbesondere vollständig kalandriert, um die Oberflächen- und Dickeneigenschaften definiert zu beeinflussen und um eine ebene Oberfläche zu erhalten. Durch eine Kalandrierung oder eine Verdichtung wird eine Abflachung des Netzes an den Drahtkreuzungspunkten erzielt, wodurch die Dicke dort kleiner als der doppelte Drahtdurchmesser sein kann. Ein Vorteil der Kalandrierung ist eine gleichmäßigere Oberflächenstruktur, die in der Anwendung als Netzelektrode vorteilhaft ist. Die Abflachung der Kontaktpunkte führt zu einer besonders vorteilhaften Vergrößerung der Kontaktfläche.

Es können auch verlötbare Netze ohne Kalandrierung als Netzelektrode eingesetzt werden.

Die Erfindung ist ebenfalls auf ein Verfahren ausgerichtet, dass mit den Merkmalen des Anspruchs 11 definiert wird. Das erfindungsgemäße Verfahren dient zur Herstellung einer Netzelektrode mit verlötbarem Netz aus Drähten, wobei das Netz aus den Drähten gewebt wird. Dabei werden vor dem Weben bzw. vor der Herstellung des Netzes wenigstens einige Drähte über ihrer Länge mit einer Dickschichtverzinnung aus wenigstens einem Lotmittel versehen, um eine homogene und gleichverteilte Lotmenge über wenigstens einem Flächenabschnitt einer Netzfläche zu ermöglichen. Die mit einer Dickschichtverzinnung zur Glättung versehenen Drähte werden oberflächenbehandelt, wozu die mit der Dickschichtverzinnung versehenen Drähte vor dem Weben durch Ziehen geglättet werden, um ein Verweben zu erleichtern.

Das erfindungsgemäße Verfahren hat ebenfalls viele Vorteile, da durch die Beschichtung der Drähte vor der Netzherstellung eine im Wesentlichen und insbesondere vollständig gleiche Dicke der Dickschichtverzinnung der einzelnen Drähte gewährleistet wird. Durch die nach dem Auftragen der Dickschichtverzinnung und vor dem Weben erfolgende Oberflächenbehandlung der Dickschichtverzinnung zur Glättung der Oberfläche wird ein einfaches und relativ kostengünstiges Verfahren zur Verfügung gestellt, mit dem sich hochqualitative und reproduzierbare verlötbare Netze herstellen lassen.

Ein erheblicher Vorteil ist auch die einfachere Überprüfung der Qualität des fertigen Netzes, da auch an den Drahtkreuzungspunkten des fertigen Netzes die einzelnen Drähte jeweils von einer Dickschichtverzinnung umgeben sind.

In bevorzugten Weiterbildungen des erfindungsgemäßen Verfahrens können die mit der Dickschichtverzinnung versehenen Drähte als Kettdrähte und/oder als Schussdrähte eingesetzt werden.

In allen Ausgestaltungen des Verfahrens wird die äußere Oberfläche des mit der Dickschichtverzinnung versehenen Drahtes vor der Netzherstellung durch Ziehen geglättet, indem der Draht beispielsweise durch eine Schablone oder ein Loch mit entsprechend angepassten Durchmesser gezogen wird. Dadurch wird die Qualität erheblich homogenisiert und gesteigert.

In weiteren Ausgestaltungen kann der mit einer Dickschichtverzinnung versehene Draht zusätzlich mit einer dünnen äußeren Metallschicht geglättet werden.

In allen Fällen ist es möglich, dass der Draht aus einem Kern besteht, der metallisch oder auch nicht metallisch sein kann, der zunächst mit einer Grundmetallisierung versehen wird, bevor die Dickschichtverzinnung aufgetragen wird.

Ebenso ist es möglich, dass der Draht vor der Netzherstellung durch insbesondere ein Webverfahren mit einer Schutzschicht beschichtet wird, um die Dickschichtverzinnung bei der Netzherstellung vor Beschädigungen zu schützen. Nach der Netzherstellung wird die Schutzschicht dann z.B. mit einem Lösungsmittel entfernt.

Die Form der verwendeten Drähte ist grundsätzlich beliebig. Es können runde und vier- oder mehreckige oder oval geformte Drähte eingesetzt werden. Auch der Einsatz abgeflachter Drähte ist möglich. Je nach Anforderungen, kann das verlötbare Netz auch als weitmaschiges Netz ausgeführt sein.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Zeichnungen.

Darin zeigen:
- Fig. 1: ein Detail einer Aufsicht auf ein verlötbares Netz;
- Fig. 2: eine Aufsicht auf eine erfindungsgemäße Netzelektrode;
- Fig. 3: einen Querschnitt eines Drahtes für ein verlötbares Netz; und
- Fig. 4: einen Querschnitt eines weiteren Drahtes für ein verlötbares Netz.

Mit Bezug auf die Figuren wird nun ein Beispiel beschrieben.

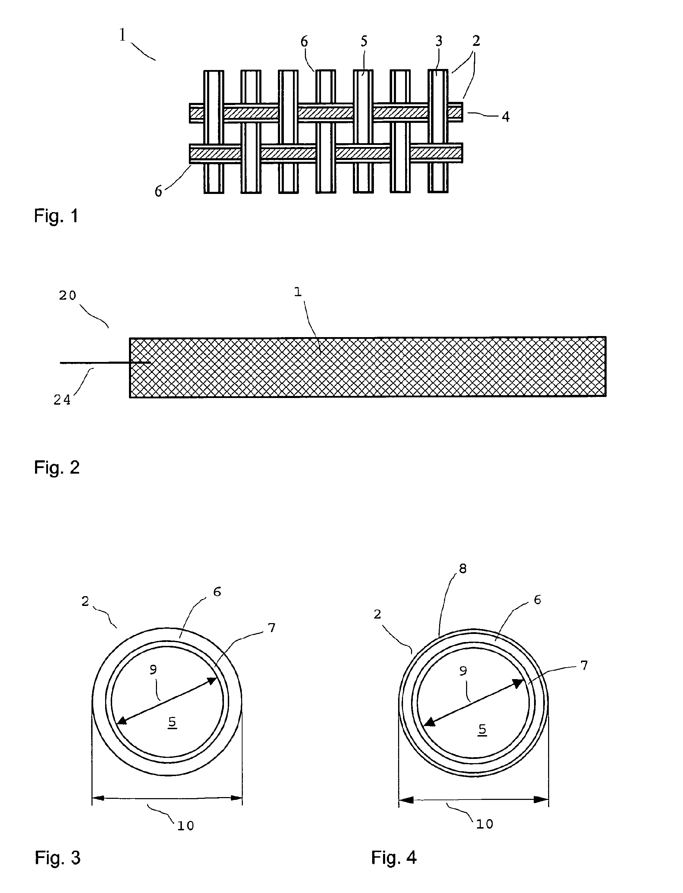

In Fig. 1 ist ein Beispiel eines verlötbaren Netzes 1 dargestellt. Das Netz 1 besteht insbesondere aus Kett- und Schussdrähten, die vorzugsweise über ein Webverfahren miteinander verwoben sind.

Die Drähte 2 weisen hier im Ausführungsbeispiel einen metallischen Kern 5 auf, der von einer Dickschichtverzinnung 6 umgeben ist. Im dargestellten Ausführungsbeispiel sind sowohl die Kettdrähte 3 als auch die Schussdrähte 4 mit einer Dickschichtverzinnung 6 umgeben.

Die Dickschichtverzinnung 6 umfasst wenigstens ein Lotmittel, wie z.B. Zinn, Zinn-Blei, Zinn-Palladium oder ein sonstiges Lotmittel und die radiale Dicke der Dickschichtverzinnung beträgt hier etwa 10 bis 20 µm, während der Kern 5 einen Durchmesser von etwa 75 µm aufweist. Die Meshzahl hängt vom konkreten Anwendungsfall ab und kann z.B. bei etwa 100 liegen.

Der Kern kann aus einer Eisen-Nickel-Legierung, wie z.B. Invar bestehen. Als Bindungsart bei einem gewobenen Netz kommt grundsätzlich jede Bindung in Frage; hier im Ausführungsbeispiel ist eine glatte Bindungsart dargestellt.

Deutlich erkennbar ist in Fig. 1, dass auch an den Kreuzungspunkten der Kett- und Schussdrähte des Netzes die Dickschichtverzinnung auf den einzelnen Drähten vorhanden ist, so dass an allen Stellen des Netzes homogene und gleichartige Bedingungen vorliegen.

In Fig. 2 ist eine Netzelektrode 20 gemäß der Erfindung dargestellt, die aus einem Netz 1 gemäß der Fig. 1 besteht. Dabei wird aus dem verlötbaren Netz 1 ein Streifen ausgeschnitten oder ausgestanzt, der eine Breite von z.B. 3 oder 5 mm aufweist, während er eine Länge von 20 bis 40 mm umfasst. Der Ausschnitt wird dabei so gewählt, dass die Kett- und die Schussdrähte 3 bzw. 4 sich jeweils in einem Winkel von etwa 45° zur Längserstreckung der Netzelektrode erstrecken. In anderen Ausgestaltungen kann die Länge der Streifen z.B. 60 oder 70 mm betragen, während die Breite nur 1,5 oder 2 mm beträgt. Als Brückenelektrode zur Verbindung zweier benachbarter Bauelemente kann die Länge auch nur 8 oder 10 mm betragen.

Die Netzelektrode 20 wird über einen Elektrodenanschluss 24 mit der Stromquelle verbunden und kann eine Randeinfassung aufweisen.

In Fig. 3 ist ein erster Querschnitt eines Drahtes 2 für die erfindungsgemäße Netzelektrode 20 dargestellt. Der Gesamtdurchmesser 10 liegt hier bei etwa 120 µm, während der Kern 5 in diesem Beispiel einen Durchmesser von etwa 75 µm aufweist und aus Metall oder auch aus einem temperaturstabilen Kunststoff bestehen kann.

Auf die äußere Oberfläche des Kerns 5 kann eine Metallisierungsschicht bzw. ein Haftvermittler 7 aufgebracht werden, der typischerweise einige Mikrometer dick ist. Auf die Außenseite des Kerns 5 oder des Haftvermittlers 7 wird eine Dickschichtverzinnung 6 aufgetragen, die hier zwischen etwa 10 und 25 µm dick ist. Im Anschluss an die Dickschichtverzinnung wird der Draht 2 durch eine Schablone gezogen, so dass die äußere Oberfläche des Drahtes geglättet wird, um beim folgenden Webprozess die Reibung herabzusetzen.

Alternativ oder zusätzlich zu einer Oberflächennachbehandlung kann auch der in Fig. 5 dargestellte Aufbau eingesetzt werden, der einen vergleichbaren Durchmesser 10 aufweist. Auf den Kern 5 nach Fig. 5 wird ein Haftvermittler 7 aufgetragen, der hier auf der ganzen Länge radial von der Dickschichtverzinnung 6 umgeben ist.

Zum Glätten und zum Härten der Oberfläche des Drahtes 2 wird eine Glättungsschicht 8, z.B. galvanisch aufgetragen, die kupfer- oder silberhaltig sein kann oder aus Kupfer oder Silber oder Legierungen daraus oder aus anderen geeigneten Materialien besteht. Dadurch wird der Draht beständig für das Webverfahren gemacht, so dass nach dem Webvorgang ein hochqualitatives verlötbares Netz 1 zur Verfügung steht.

## Patentansprüche

1. Netzelektrode mit einem verlötbaren Netz (1) aus
miteinander über einer Netzfläche verwebten Drähten (2) zum elektrischen Kontaktieren eines Bauelementes, wobei eine Dickschichtverzinnung (6) vorgesehen ist, die im Wesentlichen aus wenigstens einem Lotmittel besteht,
**dadurch gekennzeichnet,**
**dass** wenigstens einige der Drähte (2) aus einem Kern (5) bestehen, welcher über der Länge radial von der Dickschichtverzinnung (6) umgeben ist, um eine homogene und gleichverteilte Lotmenge über wenigstens einem Flächenabschnitt der Netzfläche.zu ermöglichen,
und **dass** die mit einer Dickschichtverzinnung (6) versehenen Drähte (2) zur Glättung oberflächenbehandelt sind, wozu diese Drähte (2) nach dem Aufbringen der Dickschichtverzinnung (6) durch ein Loch, einen Ziehstein bzw. eine Schablone oder eine Matrize gezogen sind, aufweisendem einen geringfügig kleineren Innendurchmesser als der Außendurchmesser des mit der Dickschichtverzinnung (6) versehenen Drahtes (2), um ein Verweben zu erleichtern,
und **dass** die radiale Dicke der Dickschichtverzinnung (6) des verlötbaren Netzes (1) wenigstens 8 µm beträgt.

2. Netzelektrode nach Anspruch 1, wobei die Drähte (2) mit Dickschichtverzinnung (6) über der Länge durch Auftragung einer dünnen Metallschicht oberflächenbehandelt sind, wobei die dünne Metallschicht eine Dicke von etwa 0,2 bis 5 µm und insbesondere eine Dicke von 0,2 bis 2 µm aufweist und Kupfer oder Kupferlegierungen oder Silber oder Silberlegierungen umfasst.

3. Netzelektrode nach einem der vorhergehenden Ansprüche, wobei wenigstens einige benachbarte Kettdrähte (3) und/oder Schussdrähte (4) aus den mit einer Dickschichtverzinnung (6) versehenen Drähten (2) bestehen.

4. Netzelektrode nach einem der vorhergehenden Ansprüche, wobei in einigen Bereichen Kettdrähte (3) und/oder Schussdrähte (4) aus Drähten (2) ohne Dickschichtverzinnung (6) bestehen.

5. Netzelektrode nach einem der vorhergehenden Ansprüche 3 bis 4, wobei auf einer ausgedehnten Netzfläche alle Kettdrähte (3) und/oder Schussdrähte (4) aus den mit Dickschichtverzinnung (6) versehenen Drähten (2) bestehen.

6. Netzelektrode nach einem der vorhergehenden Ansprüche, wobei der Kern (5) aus Metall besteht und eine Dicke von wenigstens 20 µm, insbesondere von wenigstens 40 µm aufweist.

7. Netzelektrode nach einem der vorhergehenden Ansprüche, wobei die radiale Dicke der Dickschichtverzinnung (6) zwischen 10 µm und 25 µm und vorzugsweise zwischen 10 und 20 µm liegt.

8. Netzelektrode nach einem der vorhergehenden Ansprüche, wobei der Kern (5) von einer Grundmetallisierung umgeben ist, um die Leitfähigkeit zu erhöhen.

9. Netzelektrode nach einem der vorhergehenden Ansprüche, welches wenigstens teilweise kalandriert ist.

10. Verlötbares Netz nach einem der vorhergehenden Ansprüche, wobei die Dichkschichtverzinnung (6) aus einem Weichlot besteht.

11. Verfahren zur Herstellung einer Netzelektrode mit einem verlötbaren Netz (1) aus Drähten (2) zum elektrischen Kontaktieren eines Bauelementes, wobei das Netz (1) aus den Drähten (2) gewebt wird, **dadurch gekennzeichnet, dass** vor dem Weben wenigstens einige Drähte (2) über ihrer Länge mit einer Dickschichtverzinnung (6) aus wenigstens einem Lotmittel versehen werden, um eine homogene und gleichverteilte Lotmenge über wenigstens einem Flächenabschnitt einer Netzfläche zu ermöglichen, und dass die mit einer Dickschichtverzinnung (6) zur Glättung versehenen Drähte (2) oberflächenbehandelt werden, wozu die mit der Dickschichtverzinnung (6) versehenen Drähte (2) vor dem Weben durch ein Loch, einen Ziehstein bzw. eine Schablone oder eine Matrize gezogen werden, aufweisenden einen geringfügig kleineren Innendurchmesser als der Außendurchmesser des mit der Dickschichtverzinnung (6) versehenen Drahtes (2), um ein Verweben zu erleichtern, wobei die radiale Dicke der Dickschichtverzinnung (6) des verlötbaren Netzes (1) wenigstens 8 µm beträgt.

12. Verfahren nach dem vorhergehenden Anspruch 11, wobei der mit der Dickschichtverzinnung (6) versehene Draht (2) als Kettdraht (3) und/oder Schussdraht (4) eingesetzt wird.

13. Verfahren nach einem der Ansprüche 11 bis 12, wobei der Draht (2) einen Kern (5) umfasst, der zunächst mit einer Grundmetallisierung (7) versehen wird.

14. Verfahren nach einem der Ansprüche 11 bis 13, wobei der Draht (2) vor dem Weben mit einer Schutzschicht beschichtet wird.

15. Verfahren nach einem der Ansprüche 11 bis 14, wobei das Netz (1) nach dem Weben einem Lösungsmittel ausgesetzt wird, welches die Schutzschicht entfernt.

## Claims

1. A mesh electrode with a solderable mesh (1) from wires (2) interweaved with each other across a mesh area for making electrical contact with a component part, with a thick film tin plating (6) being provided substantially comprising at least one soldering agent,
**characterised in that**
at least some of the wires (2) comprise a core (5) which across the length is radially surrounded by the thick film tin plating (6) in order to permit a homogeneous and equally distributed amount of solder across at least one area section of the mesh area,
and that the wires (2) provided with a thick film tin plating (6) are surface-treated for smoothing, wherefore said wires (2) after application of the thick film tin plating (6) are drawn through a hole, a drawing die and/or a template or a mould comprising a slightly smaller inner diameter than the outer diameter of the wire (2) provided with the thick film tin plating (6), in order to facilitate an interweaving,
and that the radial thickness of the thick film tin plating (6) of the solderable mesh (1) is at least 8 µm.

2. The mesh electrode according to claim 1, where the wires (2) with thick film tin plating are surface-treated across the length by application of a thin metal film, the thin metal film comprising a thickness of approx. 0.2 to 5 µm and in particular a thickness of 0.2 to 2 µm and copper or copper alloys or silver or silver alloys.

3. The mesh electrode according to any one of the preceding claims where at least some adjacent warp (3) and/or weft wires (4) are comprised of the wires provided with a thick film tin plating.

4. The mesh electrode according to any one of the preceding claims, where in some areas warp (3) and/or weft wires (4) are comprised of wires without thick film tin plating (6).

5. The mesh electrode according to any one of the preceding claims 3 to 4, where on an extended mesh area all warp (3) and/or weft wires (4) are comprised of the wires (2) provided with thick film tin plating (6).

6. The mesh electrode according to any one of the preceding claims, where the core (5) is comprised of metal and has a thickness of at least 20 µm, in particular of at least 40 µm.

7. The mesh electrode according to any one of the preceding claims, where the radial thickness of the thick film tin plating (6) is between 10 µm and 25 µm and preferably between 10 and 20 µm.

8. The mesh electrode according to any one of the preceding claims, where the core (5) is surrounded by a basic metallisation in order to increase conductivity.

9. The mesh electrode according to any one of the preceding claims which is at least partially calendered.

10. The solderable mesh according to any one of the preceding claims, where the thick film tin plating (6) is comprised of a soft solder.

11. A method for the manufacture of a mesh electrode with a solderable mesh from wires (2) for making electrical contact with a component part, where the mesh (1) is weaved by wires, **characterised in that** prior to weaving at least some wires (2) across their length are provided with a thick film tin plating (6) from at least one soldering agent in order to permit a homogeneous and equally distributed amount of solder across at least one area section of a mesh area, and that the wires (2) provided with a thick film tin plating (6) for smoothing are surface-treated, wherefore the wires (2) prior to weaving are drawn through a hole, a drawing die and/or a template or a mould comprising a slightly smaller inner diameter than the outer diameter of the wire (2) provided with the thick film tin plating (6), in order to facilitate an interweaving, where the radial thickness of the thick film tin plating (6) of the solderable mesh (1) is at least 8 µm.

12. The method according to the preceding claim 11, where the wire (2) provided with the thick film tin plating (6) is used as a warp (3) and/or weft wire (4).

13. The method according to any one of claims 11 to 12, where the wire (2) comprises a core (5) which at first is provided with a basic metallisation (7).

14. The method according to any one of claims 11 to 13, where the wire (2) prior to weaving is coated with a protective layer.

15. The method according to any one of claims 11 to 14, where the mesh after weaving is exposed to a solvent which removes the protective layer.

## Revendications

1. Electrode en toile métallique ayant une grille brasable (1) de fils (2) tissés entre eux sur une surface de grille, pour contacter électriquement un composant, un étamage en couche épaisse (6) étant prévu qui se compose pour l'essentiel d'au moins un métal d'apport de brasage, **caractérisée par le fait**
**qu'**au moins certains des fils (2) se composent d'un noyau (5) qui est entouré sur la longueur radialement dudit étamage en couche épaisse (6) afin de permettre une quantité de métal d'apport de brasage homogène et répartie uniformément sur au moins une portion de surface de la surface de grille,
et **que** les fils (2) pourvus d'un étamage en couche épaisse (6) sont traités à la surface pour le lissage, ce pour quoi, après avoir appliqué l'étamage en couche épaisse (6), on fait passer ces fils (2) à travers un trou, une filière ou bien un gabarit ou une matrice, présentant un diamètre intérieur légèrement inférieur au diamètre extérieur du fil (2) pourvu de l'étamage en couche épaisse (6), afin de faciliter un tissage,
et **que** l'épaisseur radiale de l'étamage en couche épaisse (6) de la grille brasable (1) est d'au moins 8 µm.

2. Electrode en toile métallique selon la revendication 1, dans laquelle les fils (2) comprenant l'étamage en couche épaisse (6) sont traités à la surface, sur la longueur, en déposant une mince couche métallique, ladite mince couche métallique présentant une épaisseur comprise entre environ 0,2 et 5 µm et en particulier une épaisseur comprise entre 0,2 et 2 µm et comprenant du cuivre ou des alliages de cuivre ou de l'argent ou des alliages d'argent.

3. Electrode en toile métallique selon l'une quelconque des revendications précédentes, dans laquelle au moins quelques fils de chaîne (3) et/ou fils de trame (4) voisins se composent des fils (2) pourvus d'un étamage en couche épaisse (6).

4. Electrode en toile métallique selon l'une quelconque des revendications précédentes, dans laquelle, dans certaines zones, des fils de chaîne (3) et/ou fils de trame (4) se composent de fils (2) dépourvus d'étamage en couche épaisse (6).

5. Electrode en toile métallique selon l'une quelconque des revendications précédentes 3 à 4, dans laquelle, sur une surface de grille étendue, l'ensemble des fils de chaîne (3) et/ou fils de trame (4) se composent des fils (2) pourvus d'étamage en couche épaisse (6).

6. Electrode en toile métallique selon l'une quelconque des revendications précédentes, dans laquelle le noyau (5) se compose de métal et présente une épaisseur d'au moins 20 µm, en particulier d'au moins 40 µm.

7. Electrode en toile métallique selon l'une quelconque des revendications précédentes, dans laquelle l'épaisseur radiale de l'étamage en couche épaisse (6) est comprise entre 10 µm et 25 µm et, de préférence, entre 10 et 20 µm.

8. Electrode en toile métallique selon l'une quelconque des revendications précédentes, dans laquelle le noyau (5) est entouré d'une métallisation de base afin d'augmenter la conductivité.

9. Electrode en toile métallique selon l'une quelconque des revendications précédentes, qui est calandrée au moins en partie.

10. Grille brasable selon l'une quelconque des revendications précédentes, dans laquelle l'étamage en couche épaisse (6) se compose d'un métal d'apport de brasage tendre.

11. Procédé de réalisation d'une électrode en toile métallique ayant une grille brasable (1) de fils (2) pour contacter électriquement un composant, la grille (1) étant tissée à partir des fils (2), **caractérisé par le fait que**, avant le tissage, au moins quelques fils (2) sont pourvus sur leur longueur d'un étamage en couche épaisse (6) en au moins un métal d'apport de brasage afin de permettre une quantité de métal d'apport de brasage homogène et répartie uniformément sur au moins une portion de surface d'une surface de grille, et que les fils (2) pourvus d'un étamage en couche épaisse (6) sont traités à la surface pour le lissage, ce pour quoi, avant le tissage, on fait passer les fils (2) pourvus de l'étamage en couche épaisse (6) à travers un trou, une filière ou bien un gabarit ou une matrice, présentant un diamètre intérieur légèrement inférieur au diamètre extérieur du fil (2) pourvu de l'étamage en couche épaisse (6), afin de faciliter un tissage, l'épaisseur radiale de l'étamage en couche épaisse (6) de la grille brasable (1) étant d'au moins 8 µm

12. Procédé selon la revendication précédente 11, dans lequel le fil (2) pourvu de l'étamage en couche épaisse (6) est mis en oeuvre en tant que fil de chaîne (3) et/ou fil de trame (4).

13. Procédé selon l'une quelconque des revendications 11 à 12, dans lequel le fil (2) comprend un noyau (5) qui est pourvu d'abord d'une métallisation de base (7).

14. Procédé selon l'une quelconque des revendications 11 à 13, dans lequel le fil (2) est revêtu d'une couche protectrice avant le tissage.

15. Procédé selon l'une quelconque des revendications 11 à 14, dans lequel, après le tissage, la grille (1) est soumise à un solvant qui élimine ladite couche protectrice.
